# EUROPEAN PATENT APPLICATION

(11) **EP 3 570 296 A1**
(43) Date of publication of application: **20.11.2019**
(21) Application number: 18000452.5
(22) Date of filing: 14.05.2018
(51) Int. Cl.: H01B 1/22, H01M 10/653, H01M 10/655

(54) **THERMALLY-CONDUCTIVE GAP FILLER**

(71) Applicant: 3M Innovative Properties Company, Saint Paul, MN 55133-3427 (US)
(72) Inventor: Jurjevic, Simone, 41468 Neuss (DE); Goeb, Siegfried Rainer, 47877 Willich (DE); Eichler, Jens, 41564 Kaarst (DE)
(74) Representative: Müller, Bruno

(57) **Abstract**

Thermally-conductive gap fillers are described. The gap fillers comprise a matrix polymer, a thermally-conductive filler, and a liquid flame retardant plasticizer.

## Description

### Field

The present application relates to compositions comprising a matrix polymer, a thermally-conductive filler, and a liquid flame retardant plasticizer. Such compositions may be used as thermally-conductive gap fillers, suitable, for instance, for use in electronic applications.

### Summary

In one aspect, the present application relates to a thermally-conductive gap filler comprising a matrix polymer, a thermally-conductive filler, and a liquid flame retardant plasticizer.

In another aspect, the present application relates to a thermally-conductive gap filler comprising at least one aziridino-functional polyether polymer matrix polymer, a thermally-conductive filler, and a liquid flame retardant plasticizer.

In a further aspect, the present application relates to a thermally-conductive gap filler comprising a matrix polymer, at least 65% by volume of a thermally-conductive filler based on the total volume of the thermally-conductive gap filler, and a liquid flame retardant plasticizer.

In one more aspect, the present application relates to a thermally-conductive gap filler comprising a matrix polymer, a thermally-conductive gap filler, and a phosphoric acid alkyl ester liquid flame retardant plasticizer.

In yet another aspect, the present application relates to a battery module comprising a plurality of battery cells connected to a base plate by a layer of any of the thermally-conductive gap filler compositions as described herein.

In yet one more aspect, the present application relates to a method of making a battery module comprising applying a layer of any of the thermally-conductive gap filler compositions as described herein, to a first surface of a base plate, attaching a plurality of battery cells to the layer to connect the battery cells to the base plate, and curing the thermally-conducting gap filler.

### Brief Description of the Drawings

**FIG. 1** illustrates the assembly of an exemplary battery module.
**FIG. 2** illustrates the assembled battery module corresponding to **FIG. 1****.**
**FIG. 3** illustrates the assembly of an exemplary battery subunit.

### Detailed Description

The present inventors have determined that despite previous research into the field of thermally-conductive polymer compounds, there remains a need for a thermally-conductive gap filler with a relatively low viscosity (enabling convenient handling and dispensing during manufacturing processes) and high levels of thermal conductivity performance, all the while maintaining an inherent flame retardancy. In particular, such low viscosity may be present in the uncured gap filler material, or, where the gap filler material is prepared as a multi-part system, the component parts have low viscosities (e.g., in a two-part system, in the so-called Part A and Part B).

Typical conventional thermally-conductive gap filler materials utilize solid flame retardants, such as solid phosphorous compounds and/or expandable graphite. The addition of these solid flame retardants, however, raises the viscosity of the thermally-conductive gap filler materials (or their component parts, when prepared as a multi-part system). In such compositions, to maintain the ability to handle the materials and for them to remain at a usably low viscosity, one must limit the amount of solid thermally-conductive filler.

The inventors of the present application have determined that the use of liquid flame retardant plasticizers can allow for higher loadings of thermally-conductive filler into a thermally-conductive gap filler, while maintaining a reasonable viscosity, thereby giving a material of both high thermal conductivity and good viscosity (e.g., in a viscosity in a range that is desirable for handling, especially in automated manufacturing processes).

As used herein, when it is said that a flame retardant plasticizer is a liquid, it is meant that the plasticizer is a liquid under its conditions of use and handling. For instance, if a composition is being formulated, dispensed, or stored at 25□C and 1 atmosphere of pressure, then the flame retardant plasticizer is a liquid under such conditions.

A plasticizer is a liquid or solid (often organic) that, when incorporated into a polymer, reduces the interaction between molecules and improves molecular mobility (e.g., lowers viscosity).

The thermally-conductive gap filler described herein is suitable for use in batteries and battery assemblies, specifically the types of batteries used in electric and hybrid electric automobiles. The usefulness of the compositions, however, is not so limited. The thermally-conductive gap filler described herein may find application wherever such materials are used, for instance, in electronics (e.g., consumer electronics) applications.

Thermal management plays an important role in many electronics applications. For example, challenges for integrating lithium-ion batteries into electric vehicle battery packs include performance, reliability and safety. Proper thermal management of battery assemblies contributes to addressing each of these challenges. This includes both first level thermal management where battery cells are assembled in a battery module, and second level thermal management where these modules are assembled into battery subunits or battery systems. Thermal management can also be important in the cooling of battery control units, as well as non-battery electronic applications.

Currently, thermal management for battery assemblies relies on curable-liquid gap fillers or pads. The curable liquids flow during assembly and can adjust to dimensional variations before being cured. Also, the liquids can be applied at the time of assembly allowing greater design flexibility. The current uncured and cured compositions, however, have several limitations including insufficient thermal conductivity and/or an unacceptably high viscosity.

In view of these limitations with current approaches, there is an ongoing need for improved thermally-conductive gap fillers. In general, there is a need for systems providing one or more of acceptable viscosity profiles (in the gap filler itself and/or in the component parts when such gap fillers are prepared as multi-part systems) for dispensing and handling; and good thermal conductivity performance (e.g., high loadings of thermally-conductive filler).

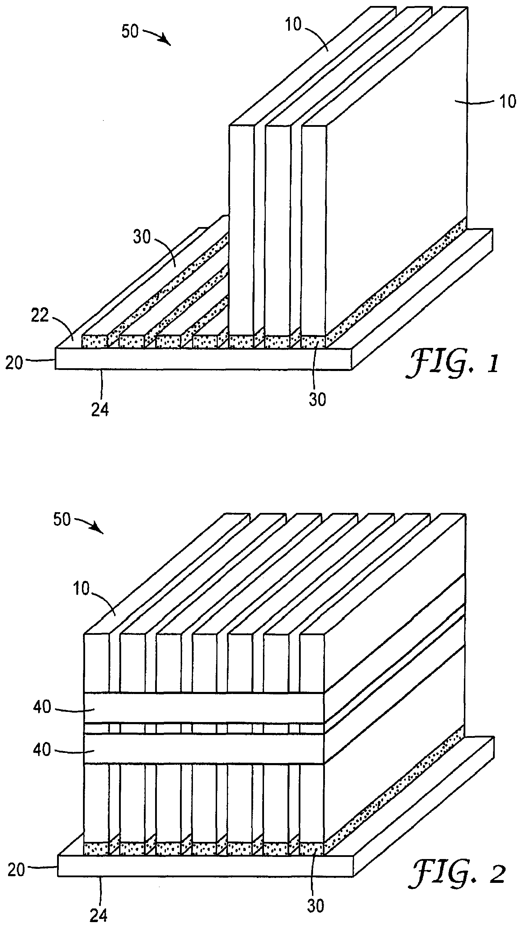

Components of a representative battery module during assembly are shown in **FIG. 1****,** and the assembled battery module is shown in **FIG. 2****.** Battery module **50** is formed by positioning a plurality of battery cells **10** on first base plate **20.** Generally, any known battery cell may be used including, e.g., hard case prismatic cells or pouch cells. The number, dimensions, and positions of the cells associated with a battery module may be adjusted to meet specific design and performance requirements. The constructions and designs of the base plate are well-known, and any base plate (typically metal base plates) suitable for the intended application may be used.

Battery cells **10** are connected to first base plate **20** through first layer **30** of a first thermally conductive gap filler according to any of the embodiments of the present disclosure. As described herein, such thermally conductive gap fillers comprise a matrix polymer, a thermally-conductive filler, and a liquid flame retardant plasticizer.

First layer **30** of the first thermally conductive gap filler provides first level thermal management where the battery cells are assembled in a battery module. As a voltage difference (e.g., a voltage difference of up to 2.3 Volts) is possible between the battery cells and the first base plate, breakthrough voltage may be an important safety feature for this layer. Therefore, in some embodiments, electrically insulating fillers like ceramics (typically alumina and boron nitride) may be preferred for use in the first thermally conductive gap filler.

In some embodiments, layer **30** may comprise a discrete pattern of the first thermally conductive gap filler applied to first surface **22** of first base plate **20,** as shown in **FIG. 1****.** For example, a pattern of gap filler corresponding to the desired lay-out of the battery cells may be applied, e.g., robotically applied, to the surface of the base plate. In some embodiments, the first layer may be formed as a coating of the first thermally conductive gap filler covering all, or substantially all, of the first surface of the first base plate, In alternative embodiments, the first layer may be formed by applying the first thermally conductive gap filler directly to the battery cells and then mounting them to the first surface of the first base plate.

During the assembly step illustrated in **FIG. 1****,** the first thermally conductive gap filler is not yet cured (or at least not fully cured). This allows the individual battery cells to be positioned and repositioned as needed to achieve the desired layout. The rheological behavior of the uncured thermally conductive gap filler aides in allowing the gap filler to flow and accommodate the dimensional variations (tolerances) within and between individual battery cells.

In some embodiments, the gap filler may need to accommodate dimensional variations of up to 2 mm, up to 4 mm, or even more. Therefore, in some embodiments, the first layer of the first thermally conductive gap filler is at least 0.05 mm thick, e.g., at least 0.1 mm, or even at least 0.5 mm thick. Higher breakthrough voltages may require thicker layers depending on the electrical properties of the gap filler, e.g., in some embodiments, at least 1, at least 2, or even at least 3 mm thick. Generally, to maximize heat conduction through the gap filler and to minimize cost, the gap filler layer should be as thin as possible, while still ensuring good (thermal) contact with first base plate **20.** Therefore, in some embodiments, the first layer is no greater than 5 mm thick, e.g., no greater than 4 mm thick, or even no greater than 2 mm thick.

In some embodiments, the first thermally conductive gap filler exhibits shear thinning behavior in its uncured state. This can assist in the uniform application of the gap filler by, e.g., spray, jet, or roll coating. This rheological behavior may aide in allowing the gap filler to be applied using conventional robotic techniques. Shear thinning may also aide in easing the positioning of the individual battery cells by allowing easier movement while still holding the cells in place before final cure is achieved.

As the first thermally conductive gap filler cures, the battery cells are held more firmly in-place. When curing is complete, the battery cells are finally fixed in their desired position, as illustrated in **FIG. 2****.** Additional elements, such as bands **40** may be used to secure the cells for transport and further handling.

Generally, it is desirable for the thermally conductive gap filler to cure at typical application conditions, e.g., without the need for elevated temperatures or actinic radiation (e.g., ultraviolet light). In some embodiments, the first thermally conductive gap filler cures at no greater than 30 °C, e.g., no greater than 25 °C, or even no greater than 20 °C. Of course, this does not mean that higher or lower temperatures are not available in the manufacturing process, and cure time can be decreased or increased with the use of higher or lower temperatures, respectively. Also, the cure temperature may be varied throughout the cure process in order to control the cure properties.

Depending on the manufacturing requirements, the time to cure is no greater than 72 hours, no greater than 48 hours, or even no greater than 24 hours. The time to cure may even be no greater than 60 minutes, e.g., no greater than 40 minutes, or even no greater than 20 minutes. Although very rapid cure (e.g., less than 5 minutes or even less than 1 minute) may be suitable for some applications, in some embodiments, an open time of at least 5 minutes, e.g., at least 10 minutes, or even at least 15 minutes may be desirable to allow time for positioning and repositioning of the battery cells. Furthermore, depending on the manufacturing process details, it may be important that the cure actually has an open time of at least 60 minutes, at least 90 minutes, or even at least 2 hours.

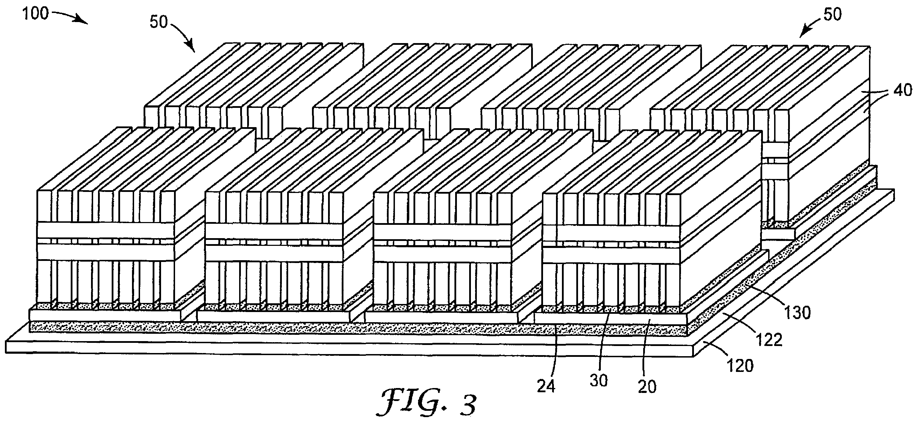

As shown in **FIG. 3****,** a plurality of battery modules **50,** such as those illustrated and described with respect to **FIGS. 1** and **2****,** are assembled to form battery subunit **100.** The number, dimensions, and positions of the modules associated with a particular battery subunit may be adjusted to meet specific design and performance requirements. The constructions and designs of the second base plate are well-known, and any base plate (typically metal base plates) suitable for the intended application may be used.

Individual battery modules **50** are positioned on and connected to second base plate **120** through second layer **130** of a second thermally conductive gap filler, which may be a thermally conductive gap filler according to any of the combinations of the present disclosure. As described herein, such thermally conductive gap fillers comprise a matrix polymer, a thermally-conductive filler, and a liquid flame retardant plasticizer.

Second layer **130** of a second thermally conductive gap filler is positioned between second surface **24** of first base plate **20** (see **FIGS. 1** and **2**) and first surface **122** of second base plate **120.** The second thermally conductive gap filler provides second level thermal management where the battery modules are assembled into battery subunits. At this level, breakthrough voltage may not be a requirement. Therefore, in some embodiments, electrically and thermally-conductive fillers such as graphite and metallic fillers may be used or alone or in combinations with electrically-insulating thermally-conductive fillers like ceramics.

In some embodiments, the second layer **130** may be formed as coating of the second thermally conductive gap filler covering all or substantially all of first surface **122** of second base plate **120,** as shown in **FIG. 3****.** In other embodiments, the second layer may comprise a discrete pattern of the second thermally conductive gap filler applied to the surface of the second base plate. For example, a pattern of gap filler corresponding to the desired lay-out of the battery modules may be applied, e.g., robotically applied, to the surface of the second base plate. In alternative embodiments, the second layer may be formed by applying the second thermally conductive gap filler directly to second surface **24** of first base plate **20** (see **FIGS. 1** and **2**) and then mounting the modules to first surface **122** of second base plate **120.**

During the assembly step the second thermally conductive gap filler is not yet cured (or at least not fully cured). This allows the individual battery modules to be positioned and repositioned as needed to achieve the desired layout. As the second thermally conductive gap filler continues to cure, the battery modules are held more firmly in-place, until they are finally fixed in their desired position.

In some embodiments, the second thermally conductive gap filler exhibits shear thinning behavior in its uncured state. This can assist in the uniform application of the gap filler to the surface of the second base plate by, e.g., spray, jet, or roll coating. This rheological behavior may aide in allowing the gap filler to be applied the surface of the second base plate using conventional robotic techniques, or may aide in easing the positioning of the individual battery modules by allowing easier movement while still holding the modules in place before final cure is achieved.

Starting with a liquid, uncured thermally conductive gap filler also aides in allowing the gap filler to flow and accommodate varying dimensional variations (tolerances) within and between individual battery modules. Therefore, in some embodiments, the layer of second thermally conductive gap filler is at least 0.05 mm think, e.g., at least 0.1, or even at least 0.5 mm thick. In some embodiments, thicker layers may be required to provide the required mechanical strength, e.g., in some embodiments, at least 1, at least 2, at least 3, at least 4, or even at least 5 mm thick. Generally, to maximize heat conduction through the gap filler and to minimize cost, the second layer should be as thin as possible, while still ensure good contact. Therefore, in some embodiments, the second layer is no greater than 5 mm thick, e.g., no greater than 4 mm thick, or even no greater than 2 mm thick.

Generally, it is desirable for the thermally conductive gap filler to cure at typical application conditions, e.g., without the need for elevated temperatures or actinic radiation (e.g., ultraviolet light). In some embodiments, the first thermally conductive gap filler cures at no greater than 30 °C, e.g., no greater than 25 °C, or even no greater than 20 °C. Of course, this does not mean that higher or lower temperatures are not available in the manufacturing process, and cure time can be decreased or increased with the use of higher or lower temperatures, respectively. Also, the cure temperature may be varied throughout the cure process in order to control the cure properties.

Depending on the manufacturing requirements, the time to cure is no greater than 72 hours, no greater than 48 hours, or even no greater than 24 hours. The time to cure may even be no greater than 60 minutes, e.g., no greater than 40 minutes, or even no greater than 20 minutes. Although very rapid cure (e.g., less than 5 minutes or even less than 1 minute) may be suitable for some applications, in some embodiments, an open time of at least 5 minutes, e.g., at least 10 minutes, or even at least 15 minutes may be desirable to allow time for positioning and repositioning of the battery cells. Furthermore, depending on the manufacturing process details, it may be important that the cure actually has an open time of at least 60 minutes, at least 90 minutes, or even at least 2 hours.

The assembled battery subunits may be combined to form further structures. For example, battery modules may be combined with other elements such as battery control units to form a battery system, e.g., battery systems used in electric vehicles. In some embodiments, additional layers of thermally conductive gap filler according to the present disclosure may be used in the assembly of such battery systems. For example, thermally conductive gap filler according to the present disclosure may be used to mount and help cool the battery control unit.

The gap fillers described herein provide desirable thermal and mechanical properties. For example, the thermally-conductive gap fillers provide the desired level of thermal conductivity. In the first level thermal management, a thermal conductivity of at least 1.5 W/mK (Watt per meter x Kelvin) may be desired, e.g., at least 2.0, at least 2.5, or even at least 3.0 W/mK.

Even higher thermal conductivities may be desirable for the second level thermal management, e.g., at least 1.5 W/mK (Watt per meter x Kelvin) may be desired, e.g., at least 2.0, at least 3.0 W/mK, at least 5 W/mk (e.g., at least 10 or even 15 W/mK).

Generally, the selection and loading levels of the thermally-conductive fillers are used to control the thermal conductivity. Factors such as the selection of the matrix polymer (considering its rheological properties), and the presence of solids other than the thermally-conductive filler, may have a significant influence on the maximum achievable thermally-conductive filler loading. In some embodiments, thermally-conductive filler loadings of at least 50% by volume (vol.%), e.g., at least 60, at least 65, or even at least 70 vol.% may be achievable while maintaining an acceptable viscosity.

The viscosity of the thermally-conductive gap filler, especially the viscosity of the individual Part A and Part B precursor materials, should be chosen based upon the manufacturing needs. In general, a lower uncured state viscosity of the thermally-conductive gap filler material and/or the Part A and Part B precursor materials may aid the manufacturing process. For instance, the Part A, Part B, or both, can have a viscosity of up to 700 Pas, up to 500 Pas, or even up to 300 Pas (as measured with a rheometer using a plate-plate set-with having a 20mm geometry, a shear rate of 2s⁻¹, a 1.5mm gap, at 23□C, as read at t=10 seconds).

The selection of the polymer used to form the thermally-conducting gap filler plays a major role in controlling one or more of (i) the rheological behavior of the uncured layer; (ii) the temperature of cure (e.g., curing at room temperature); (iii) time to cure profile of the gap filler (open time and cure time); (iv) the stability of the cured product (both temperature stability and chemical resistance); (v) the softness and spring back (recovery on deformation) to ensure good contact under use conditions; (vi) the wetting behavior on the base plate and battery components; (vii) the absence of contaminants (e.g., unreacted materials, low molecular weight materials) or volatile components; and (viii) the absence of air inclusions and gas or bubble formation.

In car battery applications, the gap filler may need to provide stability in the range of - 40°C to 90 °C. The gap filler may further need to provide the desired deformation and recovery (e.g., low hardness) needed to withstand charging and discharging processes, as well as travel over varying road conditions. In some embodiments, a Shore A hardness of no greater than 90, e.g., no greater than 80, or even no greater than 70 may be desired. Also, as repair and replacement may be important, in some embodiments, the polymer should permit subsequent cure and bonding of additional layers, e.g., multiple layers of the same thermally-conducting gap filler.

While silicone based polymers and polyurethanes are commonly used, and may be used in the presently described thermally-conductive gap filler, they may suffer certain disadvantages.

Aziridino-functional polyether polymers, on the other hand, provide a good balance of physical properties. Generally, the polyether backbone provides both good uncured rheological properties as well as good cured mechanical and thermal properties, while allowing the necessary filler loadings to achieve adequate thermal conductivity. The aziridino functionality also provides desirable cure behavior.

Polyether matrix polymers may be chosen based upon on a variety of factors, including the desired thermal and mechanical properties. Polyethers generally refer to polymers having ether groups in their main chain (backbone), as opposed to side chains. Suitable polyethers for use in the present disclosure include aliphatic polyethers. Such alkyl polyethers include straight and branched alkylene groups connected through the ether linkages. In some embodiments, the alkylene groups have 1 to 6 carbon atoms, e.g., 2 to 4 carbon atoms.

The polyether may be a homopolymer having repeat units of only a single alkylene group or a copolymer of two or more alkylene groups. Such copolymers may be block copolymers, multi-block copolymers, alternating copolymers, or random copolymers. Such copolymers can show homogenous or gradient distributions of the monomers along the chain. In some embodiments, the copolymers may contain blocks of homopolymer, blocks of random copolymers, blocks of alternating copolymers, and combinations thereof.

The polyether blocks may be selected from polytetrahydrofuran, polypropylene oxide, polyethylene oxide, copolymers of ethyleneoxide and tetrahydrofuran, copolymers of propylene oxide and tetrahydrofuran, copolymers of ethylene oxide and propylene oxide, block copolymers of ethylene oxide and propylene oxide and random terpolymers of ethylene oxide, propylene oxide, and tetrahydrofuran.

The polyethers may be prepared by the polymerization or copolymerization of cyclic ethers. Suitable cyclic ethers include, e.g., oxirane, alkyl-oxiranes (e.g., methyl-oxirane and ethyl-oxirane), substituted alkyl-oxiranes (e.g., chloro-methyl-oxirane, hydoxymethyl-oxiranes, alkoxyalkyl-oxiranes, and phenoxyalkyl-oxiranes), oxetane, tetrahydrofurane, and substituted tetrahydrofuranes, e.g., 3-methyl-tetrahydrofurane.

A polyether prepolymer of the general formula consisting of one, two three or more different repeating units is: 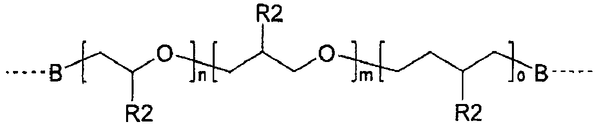
wherein: B is O or NR4;
R4 is H, a C₁ to C₁₂-Alkyl, a C₂ to -C₁₂-Alkenyl, or an Aryl;
each R2 is independently selected from H, alkyl (e.g., methyl, ethyl), substituted alkyl (e.g., chloromethly, hydroxymethyl), and phenyl; and
n, m, and o are integers.

Integers m, n, and o may be independently selected and may be zero, provided that at least one is not zero, and these values are selected such that the resulting molecular weight meets the desired conditions. In some embodiments, n, m, and o are selected such that the molecular weight is at least 2000 grams per mole, e.g., at least 3000, or even at least 5000 grams per mole. In some embodiments, n, m, and o are selected such that the molecular weight is no greater than 20,000 grams per mole, e.g., no greater 15,000 grams per mole, e.g., no greater than 10,000 grams per mole. In some embodiments, n, m, and o are selected such that the molecular weight is between 2000 and 20,000 grams per mole, e.g., between 3000 and 15,000 grams per mole, between 3000 and 10,000 grams per mole, where all ranges are inclusive of the end points.

Aziridino functional (sometime referred to as aziridinyl functional) organic moieties are attached to backbones containing oxygen atoms in the main chain. In some embodiments, the aziridino functional group is of the formula: 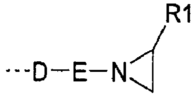
wherein: D is selected from C(=O)O, C(=O)NR5, C(=O), C(=O)C(=O)N(R5), C(=O)(CH₂)ₚ(C(=O), C(=S)NR5, and CH₂;
E is an alkylene group; and
R1 is H, a C₁ to C₁₂-Alkyl, a C₂ to C₁₂-Alkenyl, or an Aryl;
R5 is H, a C₁ to C₁₂-Alkyl, a C₂ to C₁₂-Alkenyl, or an Aryl; and
p is an integer.
In some embodiments, R1 is H-, Methyl-, Ethyl-, Ethenyl-, Propenyl-, Phenyl-, or Tolyl-.

Exemplary aziridino functional groups include: 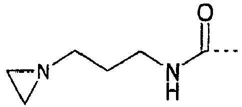 where: D = C(=O)NR5 (with R5 = H); E = 1,3-propandiyl; 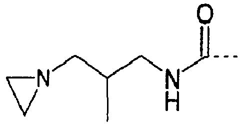 where: D = C(=O)NR5 (with R5 = H); E = 2-methyl-1,3-propandiyl; 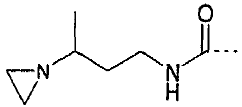 where: D = C(=O)NR5 (with R5 = H); E = 1,3-butandiyl; 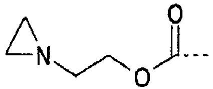 where: D = C(O)O; E = 1,2-ethandiyl; 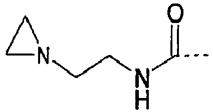 where: D = C(O)O; E = 1,2-ethandiyl; 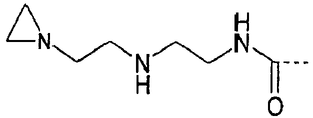 where: D = C(O)NH; E = 2-aza-1,4-butandiyl; 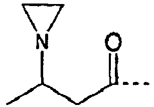 where: D = C(O); E = 2-methyl-1,2-propandiyl; 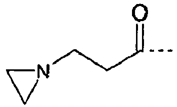 where: D = C(O); E = 1,2-ethandiyl; 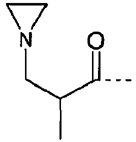 where: D = C(O); E = 1-methyl-1,2-propandiyl; 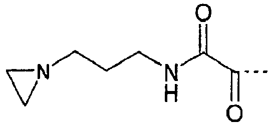 where: D = C(=O)C(=O)NR5 (with R5 = H); E = 1,3-propandiyl; 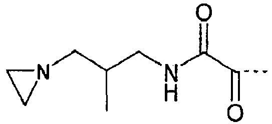 where: D = C(=O)C(=O)NR5 (with R5 = H); E = 2-methyl-1,3-propandiyl; and 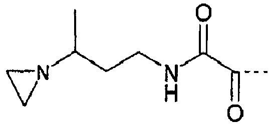 where: D = C(=O)C(=O)NR5 (with R5 = H); E = 1,3-butandiyl.

The aziridino groups may be attached to the polyether backbone through any of a variety of divalent linking groups. For example, they may be attached through carbonate-, urethane-, urea-, ester- ether- or other linkages.

In some instances, the resulting aziridino-functional polyether has the general formula: 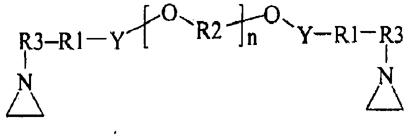
wherein: R3 is a straight chain or branched alkylene group, e.g., having 1 to 8 carbon atoms;
R1 is a covalent bond or an alkylene group;
each R2 is independently selected from the group consisting of alkylene groups;
Y is a divalent linking group;
and n is an integer selected to achieve the desired molecular weight of the polyether.

For example, in some instances, the resulting aziridino-functional polyether has the general formula: 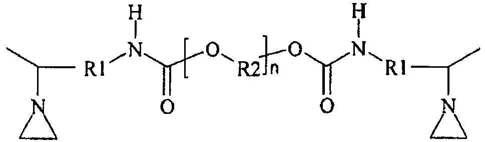 wherein: R1 is a covalent bond or an alkylene group; each R2 is independently selected from the group consisting of alkylene groups; and n is an integer selected to achieve the desired molecular weight of the polyether.

In some embodiments, n is selected such that the molecular weight is at least 2000 grams per mole, e.g., at least 3000, or even at least 5000 grams per mole. In some embodiments, n is selected such that the molecular weight is no greater than 20,000 grams per mole, e.g., no greater 15,000 grams per mole, e.g., no greater than 10,000 grams per mole. In some embodiments, n is selected such that the molecular weight is between 2000 and 20,000 grams per mole, e.g., between 3000 and 15,000 grams per mole, between 3000 and 10,000 grams per mole, where all ranges are inclusive of the end points.

In some embodiments, R1 is an alkylene group having 1 to 4 carbon atoms, e.g., 2 carbon atoms. The alkylene groups may be straight chain or branched alkylene groups.

Generally, the R2 groups may be selected independently from the R1 group. Therefore, any selection of the R2 groups may be combined with any selection of the R1 group.

In some instances, each R2 is independently selected from the group consisting of straight chain and branched alkylene groups having 1 to 6 carbon atoms, e.g., 2 to 4 carbon atoms.

In some instances, the R2 groups comprise alkylene groups having three carbon atoms.

In some instances, each of the R2 groups is an alkylene groups having three carbon atoms.

In some instances, the aziridino-functional polyether has the general formula: 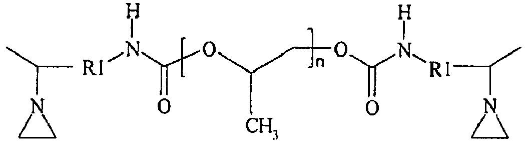 wherein R1 and n are as previously described. For example, in some embodiments, R1 is an alkylene group having two carbon atoms.

In some embodiments, the R2 groups are selected to produce a copolymer, e.g., a random copolymer of two or more different alkylene groups connected by the ether linkages. In some embodiments, such copolymers include both alkylene groups having two carbon atoms and alkylene groups having four carbon atoms. For example, in some embodiments, the aziridino-functional polyether has the general formula: 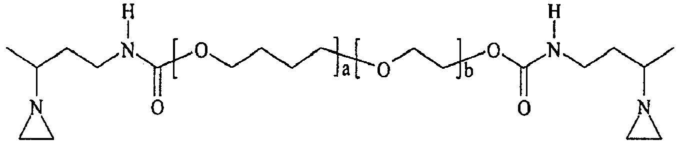 wherein: a and b are integers, and the sum of a and b equals n, which has been described herein. Although the R1 groups are show as ethylene groups, other alkylene groups may be used. It is understood that the polymer can be a block copolymer, a random copolymer or any other arrangement of repeating units.

The thermally-conductive gap fillers of the present disclosure comprise a single aziridino-functional polyether, or two or more different aziridino-functional polyethers may be combined.

Generally, any known thermally conductive fillers may be used, although electrically insulting fillers may be preferred where breakthrough voltage is a concern. Suitable electrically insulating, thermally conductive fillers include ceramics such as oxides, hydrates, silicates, borides, carbides, and nitrides. Suitable oxides include, e.g., silicon oxide and aluminum oxide. Suitable nitrides include, e.g., boron nitride. Suitable carbides include, e.g., silicon carbide. Other thermally conducting fillers include graphite and metals such as aluminum. Through-plane thermal conductivity is most critical in this application. Therefore, in some embodiments, generally symmetrical (e.g., spherical fillers) may be preferred, as asymmetrical fibers, flakes, or plates may tend to align in the in-plane direction.

To aide in dispersion and increase filler loading, in some embodiments, the thermally conductive fillers may be surface-treated or coated. Generally, any known surface treatments and coatings may be suitable.

In one aspect, it is a goal of these thermally-conductive gap fillers to provide improved flame retardancy and good viscosity, especially in light of the combination of aziridino-functional polyether and the chosen flame retardant materials. More specifically, in some embodiments, the present compositions seek to meet the flame retardancy requirements of the standard UL-94 (V2, V1 or V0). When an aziridino-functional polyether is used as the matrix polymer, there exists a need to balance the highest practical loading of thermally conductive fillers with the safety of meeting industry flame retardancy standards.

Thermally-conductive gap filler that includes solid flame retardant additives may use intumescent materials (e.g., expandable graphite and phosphorous compounds). Other solid flame retardant additives include aluminum hydroxide compounds (for instance, Aluminum trihydroxide). Specific solid flame retardant materials include those selected from the group consisting of an intumescent material, an aluminum hydroxide, and combinations thereof. Specifically, the intumescent material may be selected from the group consisting of phosphorous and expandable graphite. Furthermore, when the thermally-conductive gap filler is a phosphorous material, it may be selected from red phosphorous and white phosphorous.

The present inventors have found, however, that it is advantageous to use liquid flame retardant plasticizers such as phosphoric acid alkyl esters. When used, this liquid flame retardant plasticizers may be used as the only flame retardant in the formulation, or may be used in combination with solid flame retardant materials. Useful liquid flame retardant plasticizer include those having the general formula OP(OR1)(OR2)(OR3), wherein each of R1, R2 and R3 is independently selected from a C1-C10 aliphatic group (no aromatic ring) and a C6-C20 aryl group, a C7-C30 alkylaryl group, and a C7-C30 arylalkyl group. Such liquid flame retardant plasticizers include, for instance, 2-ethylhexyldiphenyl phosphate.

In some embodiments, the thermally-conductive gap fillers of the present disclosure include an initiator. Generally, the initiator is selected to initiate the reaction of the aziridino-groups and any initiator suitable for that purpose may be used. For example, acids are known to initiate such reactions.

In some embodiments, the initiator is a tosylate, e.g., zinc toslylate (referred to herein as Zn-TOS) having the general formula:

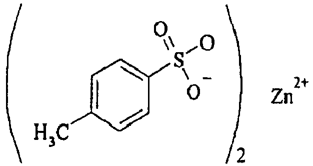

In some instances, the thermally-conductive gap filler of the present application may have, particularly in its cured state, a thermal conductivity of from 1.5 to 10.0 W/mK, for instance, from 2.0 to 7.0 W/mK.

The thermally-conductive gap filler of the present application also has, particularly in its cured state, a flame retardancy according to UL-94 of V2, V1 or V0.

The thermally-conductive gap filler of the present application may have a viscosity of its Part A, Part B, or both, of up to 700 Pas, up to 500 Pas, or even up to 300 Pas (as measured with a rheometer using a plate-plate set-with having a 20mm geometry, a shear rate of 2s⁻¹, a 1.5mm gap, at 23□C, as read at t=10 seconds.

The thermally-conductive gap filler of the present application may have, particularly in its cured state, a dielectric strength of from 2.5 to 20 kV/mm, for instance, from 2.5 to 15 kV/mm.

Of course, the thermally-conductive gap filler of the present application may have any combination of one or more of these properties.

In order to achieve low temperature, e.g., room temperature, cure without the need for actinic radiation, two-part systems may be preferred. In such systems, the initiator is in one part, often referred to as Part A, and the matrix polymer is in the second part, often referred to as Part B.

The non-reactive components may be distributed as desired between Parts A and B. In some embodiments, all the thermally-conductive fillers are in Part B with the matrix polymer. Alternatively, the thermally-conductive fillers may be present in both Parts A and B. It may be desirable to distribute the fillers such that the subsequent mixing of Parts A and B is made easier, e.g., by matching the viscosities of Parts A and B.

The present disclosure may be exemplified, for instance, in the following embodiments.
Embodiment 1. A thermally-conductive gap filler comprising a matrix polymer, a thermally-conductive filler, and a liquid flame retardant plasticizer.
Embodiment 2. The thermally-conductive gap filler of embodiment 1, wherein the thermally-conductive gap filler comprises at least 50% by volume of the thermally-conductive filler based on the total volume of the thermally-conductive gap filler.
Embodiment 3. The thermally-conductive gap filler of any of the preceding embodiments, wherein the matrix polymer comprises at least one aziridino-functional polyether polymer.
Embodiment 4. The thermally-conductive gap filler of embodiment 3, wherein the at least one aziridino-functional polyether polymer has the formula: 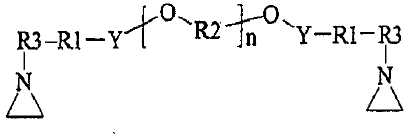
   wherein: R1 is a covalent bond or an alkylene group;
   each R2 is independently selected from the group consisting of alkylene groups;
   R3 is a straight chain or branched alkylene groups;
   Y is a divalent linking group;
   and n is an integer selected such that the calculated molecular weight of the polyether polymer is between 2000 and 10,000 grams per mole.
Embodiment 5. The thermally-conductive gap filler of embodiment 4, wherein the at least one polyether polymer has the formula: 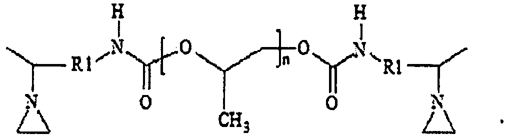
Embodiment 6. The thermally-conductive gap filler of embodiment 4, wherein each R2 is independently selected from the group consisting of linear alkylene groups having 2 to 6 carbon atoms.
Embodiment 7. The thermally-conductive gap filler of any of the preceding embodiments, wherein the thermally-conductive gap filler comprises at least 65% by volume of the thermally-conductive filler based on the total volume of the thermally-conductive gap filler.
Embodiment 8. The thermally-conductive gap filler of any of the preceding embodiments, wherein the liquid flame retardant plasticizer is a phosphoric acid alkyl ester.
Embodiment 9. The thermally-conductive gap filler of embodiment 8, wherein the liquid flame retardant plasticizer has the general formula OP(OR1)(OR2)(OR3), wherein each of R1, R2 and R3 is independently selected from a C1-C10 aliphatic group (no aromatic ring) and a C6-C20 aryl group, a C7-C30 alkylaryl group, and a C7-C30 arylalkyl group.
Embodiment 10. The thermally-conductive gap filler of embodiment 9, wherein the liquid flame retardant plasticizer is 2-ethylhexyldiphenyl phosphate.
Embodiment 11. The thermally-conductive gap filler of any of the preceding embodiments, having a thermal conductivity of from 1.5 to 10.0 W/mK.
Embodiment 12. The thermally-conductive gap filler of embodiment 11, having a thermal conductivity of from 2.0 to 7.0 W/mK.
Embodiment 13. The thermally-conductive gap filler of any of the preceding embodiments, having a flame retardancy according to UL-94 of V2, V1 or V0.
Embodiment 14. The thermally-conductive gap filler of any of the preceding embodiments, having a dielectric strength of from 2.5 to 20 kV/mm.
Embodiment 15. The thermally-conductive gap filler of embodiment 14, having a dielectric strength of from 2.5 to 15 kV/mm.
Embodiment 16. A battery module comprising a plurality of battery cells connected to a base plate by a layer of thermally-conductive gap filler according to any of the preceding embodiments.

A method of making a battery module comprising: applying a layer of a thermally-conductive gap filler according to any one of embodiments 1 to 10 to a first surface of a base plate, attaching a plurality of battery cells to the layer to connect the battery cells to the base plate, and curing the thermally-conducting gap filler.

Embodiments of the present disclosure are explained in more detail with the following non-limiting examples.

### Examples

### Thermal Conductivity Test

Samples 10 mm by 10 mm were cut from the cured films. The thermal diffusivity (a) of the cured samples was measured in square millimeters per second according to ASTM E1461/DIN EN 821 (2013) on a Netzsch-LFA HyperFlash device (Netzsch, Selb, Germany). The thermal capacity (Cp) was calculated in Joules per gram per Kelvin using the Netzsch-LFA HyperFlash in combination with a standard sample (Polyceram). The density (d) was determined in grams per cubic centimeter based on the weight and geometric dimensions of the sample. Using these parameters, the thermal conductivity (L) was calculated in Watts per meter • Kelvin according to L = a • d • Cp.

### Viscosity Measurement

Viscosity of samples was measured with a rheometer using a plate-plate set-with having a 20mm geometry. The shear rate was 2s⁻¹, the gap was 1.5mm, and the sample was at 23□C. The viscosity was read at t=10 seconds.

### Flame Test

The samples were tested using UL 94, the Standard for Safety of Flammability of Plastic Materials for Parts in Devices and Appliances testing.

UL 94 is a plastics flammability standard released by Underwriters Laboratories of the United States. The standard determines the material's tendency to either extinguish or spread the flame once the specimen has been ignited. UL-94 is now harmonized with IEC 60707, 60695-11-10 and 60695-11-20 and ISO 9772 and 9773.

Samples of approximately 12 cm square by 1.25 cm thick samples were subject to a 2 cm, 50W tirrel burner flame ignition source. The test samples were placed horizontally above the flame with the test flame impinging on the bottom of the sample. For each sample, the time to extinguish were measured and V ratings were assigned. V ratings are a measure of time to extinguish along with the sample not burning to the top clamp or dripping molten material which would ignite a cotton indicator.

The UL 94 standard provides the following classification:

**Table 1: UL94 classification**

| **UL 94 classification** | **V-0** | **V-1** | **V-2** |
|---|---|---|---|
| **Duration** | t[s] | t[s] | t[s] |
| **Burning stops within** | 10 | 30 | 30 |
| **Drips of burning material allowed (ignites cotton ball)** | No | No | Yes |
| **Total burn of sample** | No | No | No |

**Table 2. Summary of the materials used in Example preparation**

| **Material** | **Reference** | **Source** | **Brief Description** |
|---|---|---|---|
| APregon4 | MP1 | 3M Company | Propylene-glycol-bis-aziridino functionalized polymer |
| Santicizer 141 | FRP | Valtris | 2-ethylhexyldiphenyl phosphate |
| Expan C 8099 LTE | Expan | Lineta | Expandable graphite |
| Silatherm Advance 1438-800 EST | ZnO | Quarzwerke | Zinc oxide |
| p-Toluenesulfonic acid | p-TSA | Aldrich | p-Toluenesulfonic acid monohydrate |
| Disperbyk-145 | DA | Byk | Phosphoric ester salt of high molecular weight copolymer |
| ABY6Y-150 | TCF | Micron - Nippon Steel | Spherical Aluminum |
| Acclaim Polyol 4200 | AP | Covestro | Polyetherpolyol |
| Zinc tosylate | ZnTos | 3M Company | Zinc di(toluene-4,4-sulphonate) |
| Geramite 1958 | G1958 | Byk | Organophilic phyllosilicate thixotropic agent |
| Byk 4710 ET | Byk4710 | Byk | Solution of a modified urea thixotropic agent |

The following samples were prepared as two-part formulations. Part A was the initiator formulation. Part B contained the aziridino-functional polyether polymer.

The thermally-conductive fillers may be added to either Part A, Part B, or to both. Such a choice will depend on such factors the stability of such mixtures, the viscosity needed for storage and handling, and the like. In the following examples, thermally-conductive fillers were added to each of Part A and Part B, as described.

Part A was prepared by mixing together FRP and DA. For A3 and A4, a thixotropic agent was also added and mixed. Next, ZnTOS, deionized water, and ZnO were added and mixed. For A5, Expan was also added and mixed. The TCF were added in two or three steps and mixed after each addition. The mixture was degassed to avoid entrapped air.

Part B was prepared by mixing together MP1 with AP. Next TCF was added in several steps and mixed. In example 8 ZnO was added in addition to TCF. The mixture was then degassed to avoid entrapped air.

**Table 3. Summary of Part A Compositions (grams)**

| **Part A** | **FRP (g)** | **DA (g)** | **ZnO (g)** | **ZnTOS (g)** | **H2O (g)** | **TCF (g)** | **Thixotropic agent (g)** | **Expan (g)** |
|---|---|---|---|---|---|---|---|---|
| A1 | 8.0 | 0 | 1.8 | 2.5 | 1.1 | 60.0 | | |
| A2 | 8.0 | 0.192 | 1.8 | 2.5 | 1.1 | 105.0 | | |
| A3 | 8.0 | 0.192 | 1.8 | 2.5 | 1.1 | 105.0 | G1958 | |
| | | | | | | | 0.9 | |
| A4 | 8.0 | 0.192 | 1.8 | 2.5 | 1.1 | 105.0 | Byk7410 | |
| | | | | | | | 0.9 | |
| A5 | 10.0 | 0.192 | 1.8 | 2.5 | 1.1 | 105.0 | | 3.0 |
| A6 | 15.0 | 0.2 | 1.8 | 2.5 | 1.1 | 150.0 | | |
| A7 | 15.0 | 0.25 | 1.8 | 2.5 | 1.1 | 170.0 | | |
| A8 | 10 | 0 | 1.8 | 2.5 | 1.1 | 75 | | 3.0 |

**Table 4. Summary of Part B Compositions (grams)**

| **Part B** | **MP1 (g)** | **AP (g)** | **TCF (g)** | **ZnO (g)** |
|---|---|---|---|---|
| B1 | 5 | 1.5 | 59 | |
| B2 | 5 | 1.5 | 59 | |
| B3 | 5 | 1.5 | 59 | |
| B4 | 5 | 1.5 | 59 | |
| B5 | 5 | 1.5 | 59 | |
| B6 | 5 | 0 | 55 | |
| B7 | 5 | 0 | 55 | |
| B8 | 5 | 1.5 | 59 | 2 |

For each example, cured samples were prepared by mixing of Part B with Part A (the initiator past) in a vol. ratio of either 2:1 (Ex 1-5 and 8) or a vol. ratio of 1:1 (Ex 6-7). The weight of each Part is also listed in Table 5. The composition was mixed and then coated between two release liners with a knife coater to a thickness of one millimeter (mm) and cured at room temperature. Curing was complete in about 5 to 10 minutes. However, the samples were allowed to dwell overnight prior to testing.

**Table 5. Summary of Results**

| **Example** | **Part A (g)** | **Part B (g)** | **TCF (vol%)** | **Expan (vol%)** | **Viscosity (Pas) (Part A)** | **WLF (W/mK)** | **Flame Test (UL 94)** |
|---|---|---|---|---|---|---|---|
| Ex 1 | A1 (31.6 g) | B1 (68.4 g) | 66 | | 95 | 2.4 | - |
| Ex 2 | A2 (34.1 g) | B2 (65.9 g) | 70 | | 14 | 2.5 | V2 |
| Ex 3 | A3 (33.9 g) | B3 (66.1 g) | 70 | | 620 | 2.3 | V2 |
| Ex 4 | A4 (33.8 g) | B4 (66.2 g) | 70 | | 182 | 2.6 | V2 |
| Ex 5 | A5 (33.2 g) | B5 (66.8 g) | 68 | 1.1 | 80 | 2.3 | V2 |
| Ex 6 | A6 (49.3 g) | B6 (50.72 g) | 72 | | 4 | 2.6 | V2 |
| Ex 7 | A7 (49.9 g) | B7 (50.2 g) | 72 | | 8 | 2.7 | V2 |
| Ex 8 | A8 (31.4) | B8 (68.3) | 65 | 1.4 | 399 | 2.2 | V0 |

Various modifications and alterations of this invention will become apparent to those skilled in the art without departing from the scope and spirit of this invention.

## Claims

1. A thermally-conductive gap filler comprising a matrix polymer, a thermally-conductive filler, and a liquid flame retardant plasticizer.

2. The thermally-conductive gap filler of claim 1, wherein the thermally-conductive gap filler comprises at least 50% by volume of the thermally-conductive filler based on the total volume of the thermally-conductive gap filler.

3. The thermally-conductive gap filler of any of the preceding claims, wherein the matrix polymer comprises at least one aziridino-functional polyether polymer.

4. The thermally-conductive gap filler of claim 3, wherein the at least one aziridino-functional polyether polymer has the formula: 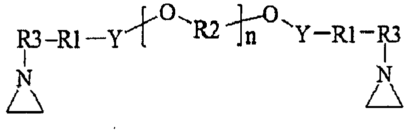
wherein: R1 is a covalent bond or an alkylene group;
each R2 is independently selected from the group consisting of alkylene groups;
R3 is a straight chain or branched alkylene groups;
Y is a divalent linking group;
and n is an integer selected such that the calculated molecular weight of the polyether polymer is between 2000 and 10,000 grams per mole.

5. The thermally-conductive gap filler of claim 4, wherein the at least one polyether polymer has the formula:

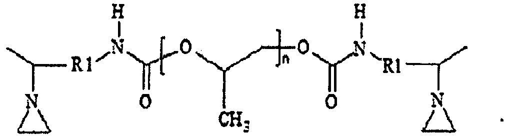

6. The thermally-conductive gap filler of claim 4, wherein each R2 is independently selected from the group consisting of linear alkylene groups having 2 to 6 carbon atoms.

7. The thermally-conductive gap filler of any of the preceding claims, wherein the thermally-conductive gap filler comprises at least 65% by volume of the thermally-conductive filler based on the total volume of the thermally-conductive gap filler.

8. The thermally-conductive gap filler of any of the preceding claims, wherein the liquid flame retardant plasticizer is a phosphoric acid alkyl ester.

9. The thermally-conductive gap filler of claim 8, wherein the liquid flame retardant plasticizer has the general formula OP(ORI)(OR2)(OR3), wherein each of R1, R2 and R3 is independently selected from a C1-C10 aliphatic group (no aromatic ring) and a C6-C20 aryl group, a C7-C30 alkylaryl group, and a C7-C30 arylalkyl group.

10. The thermally-conductive gap filler of claim 9, wherein the liquid flame retardant plasticizer is 2-ethylhexyldiphenyl phosphate.

11. The thermally-conductive gap filler of any of the preceding claims, having a thermal conductivity of from 1.5 to 10.0 W/mK.

12. The thermally-conductive gap filler of claim 11, having a thermal conductivity of from 2.0 to 7.0 W/mK.

13. The thermally-conductive gap filler of any of the preceding claims, having a flame retardancy according to UL-94 of V2, V1 or V0.

14. The thermally-conductive gap filler of any of the preceding claims, having a dielectric strength of from 2.5 to 20 kV/mm.

15. The thermally-conductive gap filler of claim 14, having a dielectric strength of from 2.5 to 15 kV/mm.
